# EUROPÄISCHE PATENTANMELDUNG

(11) **EP 0 978 924 A2**
(43) Veröffentlichungstag der Anmeldung: **09.02.2000**
(21) Anmeldenummer: 99250257.5
(22) Anmeldetag: 30.07.1999
(51) Int. Cl.: H02J 9/06

(54) **Elektrische Anlage zur Netz- und Ersatzstromversorgung von Sicherheitsleuchten**

(30) Priorität: 30.07.1998 DE 19834304; 30.07.1998 DE 19834329; 30.07.1998 DE 19834334
(71) Anmelder: DR. ING. WILLING GMBH, D-96110 Schesslitz (DE)
(72) Erfinder: Willing, Achim, Dr.-Ing., 96110 Schesslitz-Doschendorf (DE)
(74) Vertreter: Pfenning, Meinig & Partner GbR

(57) **Zusammenfassung**

Es wird eine elektrische Anlage zur Netz- und Ersatzstromversorgung von Sicherheitsleuchten (35), denen jeweils eine Betriebsvorrichtung (27) zum Betreiben mindestens einer Lampe zugeordnet ist, vorgeschlagen, eine Überwachungsvorrichtung (2') überwacht den Zustand der Stromversorgung der Allgemeinbeleuchtung und/oder der Sicherheitsbeleuchtung. Die Anlage weist eine zentrale Hauptverteilung (1) auf, die einen von der Netzstromversorgung (2) herrührenden Strom und bei deren Störung einen von der Ersatzstromversorgung (3) herrührenden Strom an mindestens eine Ausgangsleitung liefert. An die Ausgangsleitung ist mindestens eine Unterverteilung (7,10-12) angeschlossen, die mit mindestens einem eine Mehrzahl von Sicherheitsleuchten aufweisenden Ausgangsstromkreis (13-20) verbunden ist. Die elektrische Verbindung zwischen Unterverteilung und Hauptverteilung einerseits und Unterverteilung und Sicherheitsleuchten andererseits besteht bis auf schaltungsbedingte kurze Unterbrechungen ständig. Der von der Unterverteilung an den Ausgangsstromkreis gelieferte Versorgungsstrom für die Leuchten besitzt abhängig von dem Zustand der Stromversorgung der Allgemeinbeleuchtung unterschiedliche Stromformen, wobei die Betriebsvorrichtung jeder Sicherheitsleuchte eine Erkennungs- und Steuerschaltung (28) aufweist, die abhängig von der Stromform des Versorgungsstroms der Leuchte die Betriebsart und/oder den Betriebszustand der mindestens eine Lampe (32) steuert.

## Beschreibung

Die Erfindung betrifft eine elektrische Anlage zur Netz- und Ersatzstromversorgung nach dem Oberbegriff des Hauptanspruchs in Beleuchtungsanlagen mit zentraler Notstromversorgung.

Derartige Anlagen sind allgemein bekannt und liefern bei Ausfall der allgemeinen Stromversorgung einen Ersatzstrom zur Speisung der in der Beleuchtungsanlage vorgesehenen Sicherheitsbeleuchtung. Dieser kann aus einer Batterie oder einem Ersatzstromaggregat erzeugt werden, wobei je nach Ersatzstromquelle und Anforderungen an das Ersatzstromnetz gegebenenfalls der Ersatzstromquelle zur Speisung der Sicherheitsleuchten ein Gleichstromwandler oder Wechselrichter nachgeschaltet wird, der die gewünschte Form des Stromes und die Spannungslage bestimmt. Somit wird zur Ersatzstromversorgung entweder Wechselstrom oder Gleichstrom angeboten mit dem über entsprechend geeignete Vorschalt- oder Betriebsgeräte die Lampen der Sicherheitsbeleuchtung, nämlich Leuchtstofflampen, Glühlampen, Leuchtdioden oder andere elektrische Lichtquellen betrieben werden.

Es wird in der Sicherheitsbeleuchtung hinsichtlich ihrer Betriebsart zwischen Dauerschaltung und Bereitschaftsschaltung der Leuchten unterschieden, je nachdem ob diese Leuchten ständig, d.h. sowohl bei Netzstrom als auch bei Ersatzstrom oder nur im Falle der Ersatzstromversorgung betrieben werden. Leuchten der Dauerschaltung und der Bereitschaftsschaltung werden üblicherweise an voneinander getrennten Stromkreisen betrieben, die auch separat überwacht und geschaltet werden.

Im Falle der Dauerschaltung wird die Netzstromversorgung des Hauptverteilers bzw. der Hauptverteilung der Ersatzstromversorgung überwacht und die Not- bzw. Sicherheitsleuchten in Dauerschaltung werden bei einer am Hauptverteiler ermittelten Störung aus der Ersatzstromquelle versorgt.

Im Falle der Bereitschaftsschaltung wird die Stromversorgung im Unterverteiler bzw. in der Unterverteilung der Allgemeinbeleuchtung des Bereichs überwacht, in dem die Bereitschaftsleuchten installiert sind. Wenn die Stromversorgung im Unterverteiler der Allgemeinbeleuchtung gestört ist und somit das Licht in diesem Bereich ausfällt, wird die Sicherheitsbeleuchtung zugeschaltet, die nunmehr wiederum direkt aus der Ersatzstromversorgung gespeist wird. Um jedoch bei einem Ausfall lediglich eines Teilbereiches der Beleuchtung, also einer Störung an einem der Unterverteiler oder einem Teil der Unterverteiler der Allgemeinbeleuchtung nicht bereits die Ersatzstromversorgung verbrauchen zu müssen, wird oft eine sogenannte modifizierte Bereitschaftsschaltung angewendet, bei der zunächst geprüft wird, ob der Netzstrom im Hauptverteiler, gegebenenfalls auch in anderen Phasen eines Drehstromnetzes, noch vorhanden sind, um diesen dann zur Versorgung der Bereitschaftsleuchten nutzen zu können.

Die Stromkreise der Leuchten in Bereitschaftsschaltung und die Stromkreise der Leuchten in Dauerschaltung werden getrennt am Hauptverteiler der Stromversorgung geschaltet, wobei meist für jeden Stromkreis eine getrennte Schaltvorrichtung eingerichtet ist.

Dies hat einen hohen Verdrahtungsaufwand zur Folge, da jeder Stromkreis an den Hauptverteiler herangeführt werden muß. Besonders hoch wird der Schaltungsaufwand bei der Anwendung modifizierter Bereitschaftsschaltung, bei der die sogenannten kritischen Stromkreise der Unterverteilungen überwacht werden müssen und entsprechende Meldeleitungen bis an den Hauptverteiler herangeführt werden müssen. Dieser hohe Schaltungsaufwand wird auch benötigt, wenn in großen Anlagen Unterverteilungen eingerichtet werden, dann verlagert sich der gesamte Aufwand auf die Unterverteilungen. Weiterhin sind die Stromkreise der Leuchten in Bereitschaftsschaltung bei Vorhandensein des Netzes von der Zuleitung getrennt und damit stromlos und können somit auch nicht ständig überwacht werden.

Eine weitere Problematik ist die sogenannte Lichtbedarfsschaltung, bei der unter Beibehaltung aller logischen Funktionen der Sicherheitsbeleuchtung die Leuchten der Bereitschaftsschaltung mit der Allgemeinbeleuchtung geschaltet werden.

Die bekannten elektrischen Anlagen zur Netz- und Ersatzstromversorgung von Sicherheitsleuchten haben neben den oben erwähnten Nachteilen den weiteren Nachteil, daß bei einer Veränderung der Anlage aufgrund einer Veränderung der Baulichkeiten ein hoher Aufwand bei der Änderung der Installation benötigt wird oder die Anlage muß eine große Flexibilität aufweisen, bei der ein großer Aufwand bei der Planung und bei der Realisierung verlangt wird.

Der Erfindung liegt daher die Aufgabe zugrunde, eine elektrische Anlage zur Netz- und Ersatzstromversorgung von Sicherheitsleuchten zu schaffen, die bei großer Flexibilität einen verringerten Verdrahtungsaufwand sowie Schaltungsaufwand in den Verteilern aufweist, wobei an der Hauptverteilung oder den Unterverteilungen keine Unterscheidung zwischen Sicherheitsleuchten in Dauer- oder Bereitschaftsschaltung getroffen werden muß. Weiterhin soll eine modifizierte Bereitschaftsschaltung auf einfache Weise möglich sein, ebenso wie eine Lichtbedarfsschaltung.

Diese Aufgabe wird erfindungsgemäß durch die kennzeichnenden Merkmale des Hauptanspruchs in Verbindung mit den Merkmalen des Oberbegriffs gelöst.

Durch die in den Unteransprüche angegebenen Maßnahmen sind vorteilhafte Weiterbildungen und Verbesserungen möglich.

Die erfindungsgemäße Anlage für die Sicherheitsbeleuchtung weist eine zentrale Stromversorgung mit einer Hauptverteilung auf, wobei diese Stromversorgung entweder Netzstrom oder Ersatzstrom in das Leitungsnetz der Sicherheitsbeleuchtung einspeist, das, wie üblich, getrennt von dem übrigen Leitungsnetz, d.h. dem Leitungsnetz der Allgemeinbeleuchtung ist. Das Leitungsnetz zur Lösung der Erfindung ist so aufgebaut, daß von der Hauptverteilung mindestens eine Ausgangsleitung zu mindestens einer Unterverteilung gelegt ist. Von der mindestens einen Unterverteilung ausgehend wird zunächst ohne Unterscheidung, ob es sich um eine Leuchte in Dauerschaltung oder Bereitschaftsschaltung handelt, jede Leuchte elektrisch verbunden, wobei dies, wie allgemein üblich, sternförmig in einem oder mehreren Endstromkreisen geschehen kann. Mit dieser Maßnahme wird erreicht, daß jede Leuchte der Sicherheitsbeleuchtung ständig und in jedem Zustand der Stromversorgung mit der Zentrale, d.h. der Hauptverteilung elektrisch verbunden ist. In einer solchen Anlage der Sicherheitsbeleuchtung muß zwischen Leuchten unterschiedlicher Betriebsarten unterschieden werden.

Erfindungsgemäß wird die Voraussetzung für eine solche Unterscheidung dadurch geschaffen, daß den Leuchten über die aufgrund des Aufbaus des Leitungsnetzes immer verbundenen elektrischen Zuleitungen zusätzliche Informationen zur Verfügung gestellt werden. Eine Analyse der unbedingt notwendigen Funktionen zeigt, daß bereits zwei Informationen ausreichen, nämlich die Information, ob alle Leuchten, unabhängig von ihrer Betriebsart (Dauer- oder Bereitschaftsschaltung) betrieben werden sollen oder lediglich die Leuchten in Dauerschaltung. Im normalen Betrieb, also ohne Störung der Stromversorgung, sollen nur die Leuchten für den Dauerbetrieb eingeschaltet sein. Dagegen müssen bei einer substantiellen Störung der Stromversorgung der Allgemeinbeleuchtung und der Sicherheitsbeleuchtung, also im Notbetrieb, sämtliche Sicherheitsleuchten eingeschaltet werden. Entsprechend der Erfindung wird die Möglichkeit der Unterscheidung der notwendigen Funktionen dadurch erreicht, daß die Form des Versorgungsstroms als Unterscheidungskriterium genutzt wird. Zur Erkennung der unterschiedlichen Stromformen und zur entsprechenden Steuerung der Lampen der Leuchten weist die jeweiligen Betriebsvorrichtung der Leuchten eine Erkennungs- und Steuerschaltung auf, durch die die Unterscheidung der Betriebsart der jeweiligen Leuchte vorgenommen wird. Die Erkennungs- und Steuerschaltung kann dabei eine logische Schaltung oder ein Mikroprozessor sein, der den jeweiligen Stromformen die Betriebsart und die gewünschten Betriebszustände zuordnet. Dabei kann die Betriebsvorrichtung derart ausgebildet sein, daß die Erkennungs- und Steuerschaltung in dem als Vorschaltgerät, elektronisches Vorschaltgerät, Transformator oder sonstige Vorrichtung ausgebildeten Betriebsgerät integriert ist oder diesem vorgeschaltet ist. Die eigentliche Steuerung der Lampen wird von diesem Betriebsgerät vorgenommen.

Als Stromformen stehen beispielsweise Gleichstrom positiver Polarität, Gleichstrom negativer Polarität, pulsierender Gleichstrom positiver Polarität, pulsierender Gleichstrom negativer Polarität, Wechselstrom zur Verfügung, die mit geringem technischen Aufwand in der Anlage erzeugt werden können.

Die Erzeugung der Stromform für den Versorgungsstrom der Sicherheitsleuchten kann abhängig von den benötigten Informationen über die Betriebsart und/oder den Betriebszustand sowohl in der Hauptverteilung als auch in der oder den Unterverteilungen vorgenommen werden. So kann beispielsweise dem in der Hauptverteilung vorhandenen störungsfreien Netzwechselstrom die Information zugeordnet werden, daß sich die Anlage im störungsfreien Zustand befindet und daß nur die für den Dauerbetrieb vorgesehenen Leuchten eingeschaltet werden. Mit einer von der Ersatzstromquelle, beispielsweise einer Batterie erzeugten Gleichspannung kann die Information enthalten sein, daß der Notbetrieb eingeschaltet werden muß, d.h. daß sowohl Leuchten in Dauerschaltung als auch in Bereitschaftsschaltung eingeschaltet werden müssen. Weitere Signalformen, beispielsweise pulsierender Gleichstrom mit positiver und negativer Polarität können zum Beispiel abhängig von der Information des Schaltzustandes der Allgemeinbeleuchtung als Lichtbedarfsschaltung oder auch der Stromversorgung in Unterverteilungen der Allgemeinbeleuchtung als modifizierte Bereitschaftsschaltung erzeugt werden. Dazu werden Fühlerleitungen vorzugsweise zu den Unterverteilungen geführt, die dann ihren Eingangsstrom umformen in den Strom mit der gewünschten Stromform.

Aufgrund des erfindungsgemäßen Aufbaus der Anlage hat diese eine sehr große Flexibilität, sie kann ohne große Schwierigkeiten und ohne großen Aufwand beispielsweise aufgrund von baulichen Anforderungen geändert werden, wobei z.B. bei einer Erweiterung lediglich weitere Stromkreise oder weitere Unterverteilungen hinzugefügt werden, ohne die restliche Anlage zu ändern. Soll die Betriebsart der Leuchten in unterschiedlichen Stromkreisen geändert werden, muß lediglich die Leuchte selbst oder das Betriebsgerät oder nur die Programmierung des Betriebsgerätes geändert werden. In gleicher Weise können andere Betriebszustände von Leuchten, wie die Lichtbedarfsschaltung oder eine Dimmung der Leuchten oder auch eine modifizierte Bereitschaftsschaltung derart vorgegeben werden, daß Leuchten mit dem zugeordneten Betriebsgerät, d.h. der zugeordneten Erkennungs- und Steuerschaltung ausgetauscht oder hinzugefügt werden und die entsprechende Information zur Bildung der speziellen Stromform an die Hauptverteilung, Unterverteilung oder die Leuchte selbst gegeben werden.

Die Ausgangsleitung der Hauptverteilung kann entsprechend der Erfindung aus einer einzigen mehrpoligen Leitung bestehen, sie kann aber auch als Ringleitung zur Erhöhung der Redundanz der Stromversorgung ausgebildet sein, es können mehrere sternförmig angelegte Leitungen vorgesehen sein oder sie kann aus einer Mischung der verschiedenen Leitungsformen gebildet sein.

Eine sehr hohe Betriebssicherheit für die gesamte Anlage kann durch Verwendung funktionserhaltender Leitungen zwischen Hauptverteilung und Unterverteilung erreicht werden, wobei es vorteilhaft sein kann, die Unterverteilung im gleichen Brandabschnitt wie die Endstromkreise, d.h. die Stromkreise der Leuchten der Sicherheitsbeleuchtung zu errichten.

Auch sind beliebig viele Unterverteilungen vorsehbar, wobei diese möglichst in der Nähe der Leuchtengruppe angeordnet sind. Selbstverständlich können nach den Unterverteilungen weitere Verteilungen zur kostengünstigen Einspeisung in die Endstromkreise der Sicherheitsleuchten eingerichtet werden, wobei diese im Sinne der Erfindung lediglich stromverteilende Funktionen übernehmen können, während die erfindungsgemäßen Unterverteilungen der Anlage zusätzliche Funktionen aufweisen.

Insbesondere bei kleinen Anlagen ist es denkbar, daß nur eine einzige Unterverteilung vorgesehen, die bei entsprechenden baulichen Verhältnissen sogar in baulicher Einheit mit der Hauptverteilung der erfindungsgemäßen Anlage eingerichtet sein kann.

Es sind beliebige Netzformen sowohl für die Unterverteilungen als auch für die Endstromkreise möglich, insbesondere können Knotenpunkte geschaffen werden, von denen aus wiederum Endstromkreise, beispielsweise sternförmig angeschlossen werden können.

Die Stromformen und die zugeordneten Informationen werden vorzugsweise so gewählt, daß die Stromformen leicht und ohne großen Aufbau zu erzeugen sind, dazu können zusätzliche Umformeinheiten in der Hauptverteilung und den Unterverteilungen vorgesehen sein, und daß die für die Umformung des Stromes benötigten Informationen leicht zugeführt werden können. Den Stromformen können Hierarchien zugeordnet werden, beispielsweise hat die Stromform zur Einschaltung der Sicherheitsbeleuchtung bei Ausfall der Netzstromversorgung immer Vorrang vor allen anderen Stromformen. Es können neben den schon erwähnten Betriebsarten und Betriebszuständen andere Funktionen noch weiteren Signal- oder Stromformen zugeordnet werden, beispielsweise ein Prüfbetrieb, ein manuelles Ein- bzw. Ausschalten oder dergleichen. Die Betriebsvorrichtungen der entsprechenden Leuchten sind dann an die entsprechenden Strom- und Signalformen angepaßt und setzen die Funktion in die Steuerung der Lampen der Leuchten um.

Insbesondere in kleineren Anlagen und in Anlagen, in denen die Lampen der Sicherheitsbeleuchtung in Leuchtengehäusen aufgenommen sind, die auch schaltbare Lampen der Allgemeinbeleuchtung enthalten, kann die Realisierung der Lichtbedarfsschaltung oder der modifizierten Bereitschaftsschaltung oder auch anderer Funktionen dadurch vorgenommen werden, daß die entsprechenden Informationen, beispielsweise die Fühlleitungen bis an die Betriebsvorrichtungen der einzelnen Leuchten gezogen werden, wobei die zugeordneten Erkennungs- und Steuerschaltungen dann abhängig von der Form ihres Versorgungsstromes und dem Zustand auf der Fühlleitung die gewünschte Funktion erkennen und entsprechend die Lampen steuern. Auf diese Weise lassen sich auch Leuchten mit Anschluß an Treppenhausautomaten herstellen.

Schließlich können erfindungsgemäß wegen des ständigen Vorhandenseins einer Stromversorgung an den Betriebsgeräten Schaltungen aufgebaut werden, bei denen die Funktionsfähigkeit der Leuchten bei vorhergehenden Umschaltvorgängen registriert wird und an den Leuchten für eine Kontrolle zu einem beliebigen späteren Zeitpunkt angezeigt wird. Beliebige weitere Funktionen, z.B. den Zustand der Anlage betreffend oder die Funktionsfähigkeit der Leuchten oder aber Informationen über das erstellte Leitungsnetz durch Datenfernübertragung ausgetauscht werden, wobei z.B. in der Hauptverteilung und den Unterverteilungen oder einzelnen Unterverteilungen Bausteine für die Datenfernübertragung installiert sind. Dabei können auch einzelne Leuchten für deren Überwachung angesprochen werden, wenn eine entsprechende Adressierung vorgesehen ist.

Besonders vorteilhaft ist, daß die erfindungsgemäße Anlage neben den Leuchten als Endgeräte auch andere Verbraucher einbezogen werden können. Hier sind z.B. Rauchmelder zu nennen, die in übertragenem Sinne im Dauerbetrieb betrieben werden, ihre Kontrollfunktion also zu jedem Zeitpunkt ausüben.

Ausführungsbeispiele der Erfindung sind in der Zeichnung dargestellt und werden in der nachfolgenden Beschreibung näher erläutert. Es zeigen
- Fig. 1: den Aufbau eines Leitungsnetzes einer Anlage nach einem Ausführungsbeispiel der vorliegenden Erfindung mit Hauptverteilung der Sicherheitsstromverteilung und Unterverteilungen sowie Endstromkreise der Leuchten,
- Fig. 2: ein Ausführungsbeispiel einer in der Anlage verwendeten Unterverteilung ohne Umformeinheit zur Erzeugung einer vom Eingangsstrom abweichenden Stromform,
- Fig. 3: ein weiteres Ausführungsbeispiel einer Unterverteilung der erfindungsgemäßen Anlage mit einer Umformeinheit zur Erzeugung einer vom Eingangsstrom abweichenden Stromform,
- Fig. 4: einen Aufbau einer Sicherheitsleuchte mit Betriebsvorrichtung zum Betreiben der Lampe.

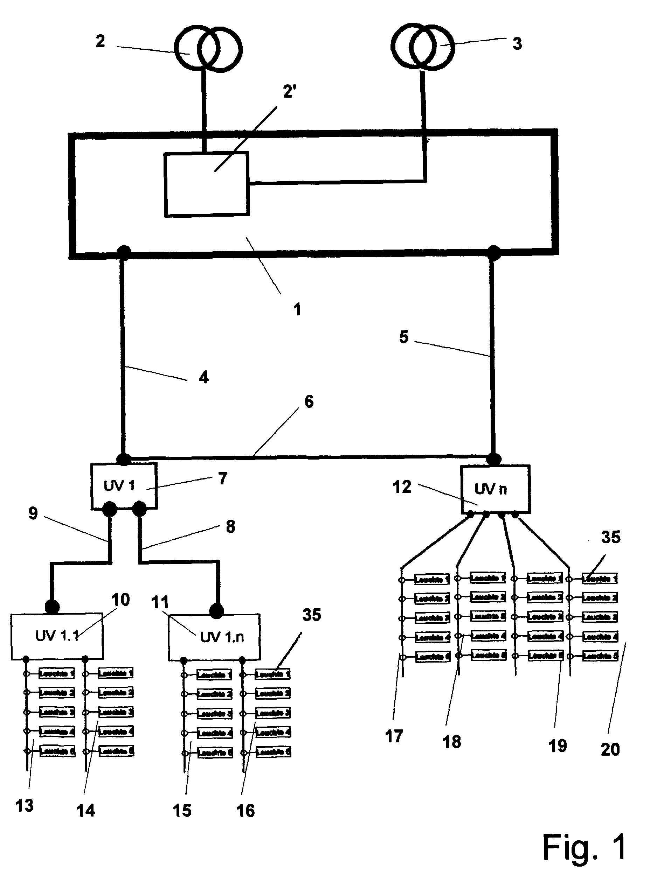

In der in der Fig. 1 dargestellten Anlage ist mit 1 eine Hauptverteilung einer Ersatzstromversorgung für die Sicherheitsbeleuchtung dargestellt, die mit dem Netz 2 verbunden ist und einen Wechselstrom daraus bezieht und weiterhin mit einer Ersatzstromversorgung 3 verbunden ist bzw. diese beinhaltet. Die dargestellte Anlage dient der Sicherheitsbeleuchtung einer nicht dargestellten Anlage für die Allgemeinbeleuchtung, wobei üblicherweise die Allgemeinbeleuchtung aus demselben Netz 2 gespeist wird, jedoch auch eine andere Netzstromversorgung haben kann. Die Ersatzstromversorgung 3 kann eine Batterie sein, die Gleichstrom liefert, sie kann aber auch als Dieselgenerator oder als zweites Netz ausgebildet sein. Die Hauptverteilung ist mit einer Überwachungseinrichtung 2' versehen, die einen Ausfall des Netzstromes feststellt und die auf die Ersatzstromquelle 3 umschaltet. Die Überwachungseinrichtung 2' dient im üblichen Fall gleichermaßen zur Überwachung des Netzstromes der Allgemeinbeleuchtung, in Sonderfällen kann eine getrennte Überwachungseinrichtung für die Überwachung des Netzstroms der Allgemeinbeleuchtung vorgesehen sein.

Die Hauptverteilung 1 weist eine Ausgangsleitung auf, die im dargestellten Ausführungsbeispiel als Ringleitung mit den Strängen 4, 5 und 6 ausgebildet ist. An die Ringleitung 4, 5, 6 sind eine Mehrzahl von Unterverteilungen angeschlossen, von denen nur die Unterverteilung 7 und 12 dargestellt sind. Die Unterverteilung 7 hat beispielhaft weitere Unterverteilungen 10, 11, die über die Leitungen 8, 9 mit der jeweils höheren Ebene der Unterverteilung verbunden sind. Mit der Unterverteilung 12 sind direkt Endstromkreise 17, 18, 19, 20 verbunden, die jeweils die zu schaltenden Leuchten 35 aufweisen. Weitere Endstromkreise 13, 14 bzw. 15, 16 mit Leuchten 35 sind an die Unterverteilungen 10, 11 angeschlossen.

An den Ausgangsleitungen 4, 5, 6 liegt üblicherweise im Normalbetrieb Netzstrom als Wechselstrom an, während im Notbetrieb nach Umschaltung auf die Ersatzstromquelle Gleichstrom geliefert wird, wenn eine Batterie als Ersatzstromquelle 3 dient. Falls andere Ersatzstromquellen, wie ein Generator oder ein anderes Netz vorgesehen sind, wird Strom einer anderen Stromform erzeugt, wobei vorgesehen sein muß, daß diese andere Stromform sich von dem Netzstrom unterscheidet. Zur Änderung der Stromform der Ersatzstromquelle 3 kann daher gegebenenfalls eine nicht dargestellte Umformeinheit, beispielsweise ein Gleichrichter oder dergleichen vorgesehen sein, die einen Gleichstrom liefert.

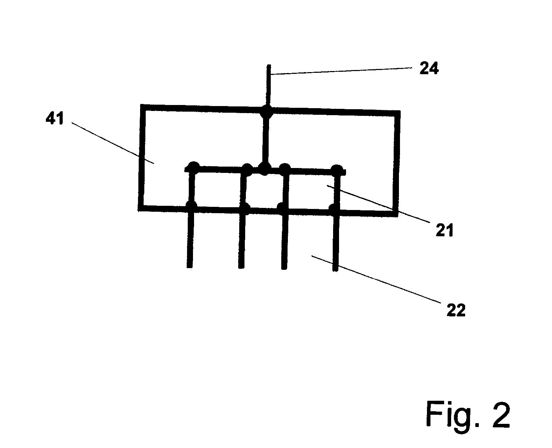

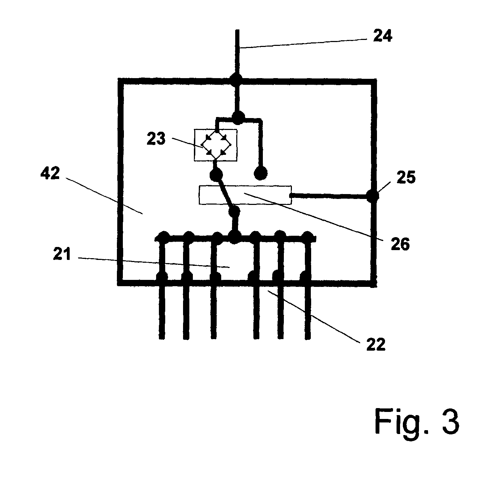

In den Fign. 2 und 3 sind Ausführungsbeispiele der Unterverteilungen 7, 10, 11, 12 dargestellt. Fig. 2 zeigt eine Unterverteilung 41, über deren Eingangsleitung 24 Strom mit sämtlichen in der Hauptverteilung 1 erzeugten Stromformen eingespeist wird, der über ein Verteilerfeld 21 auf die die Leuchten aufweisenden Endstromkreise 22 geleitet wird.

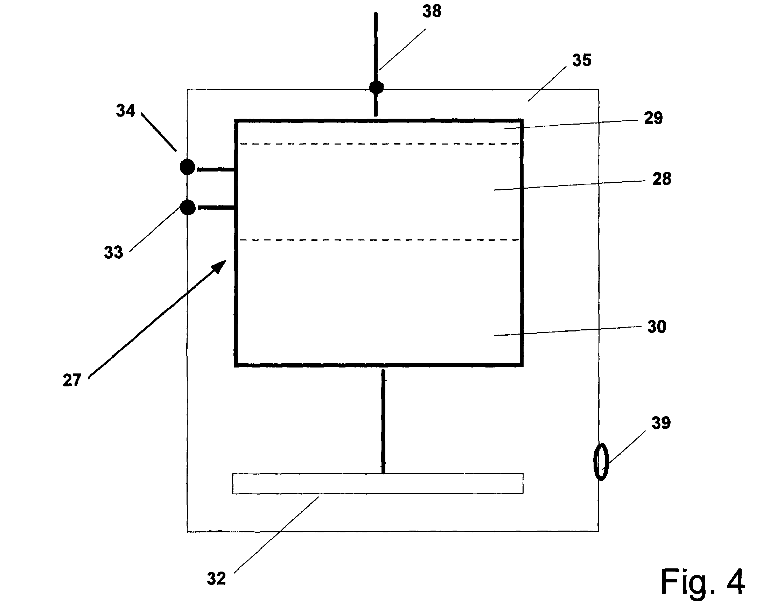

In Fig. 4 ist der Aufbau einer Sicherheitsleuchte 35 mit einer Betriebsvorrichtung 27 dargestellt, die eine oder mehrere Lampen 32 betreibt. Die Betriebsvorrichtung weist ein übliches Lampenvorschaltgerät 30 auf, das je nach Art der Lampe unterschiedlich ausgebildet sein kann, beispielsweise als EVG (elektronisches Vorschaltgerät), Transformator oder sonstige Vorrichtung. Zusätzlich ist eine Erkennungs- und Steuereinheit 28 vorgesehen, die die Stromform des über die Eingangsleitung 38 gelieferten Versorgungsstroms für die Lampe 32 erkennt und abhängig von der Stromform die Lampe 32 in ihrer Betriebsart und ihrem Betriebszustand über das Lampenvorschaltgerät 30 steuert. Als Betriebsart wird hier der Dauerbetrieb und der Bereitschaftsbetrieb der Sicherheitsleuchte genannt.

In Fig. 4 sind als weitere Elemente zwei mit der Erkennungs- und Steuereinheit 28 verbundene Fühlerleitungen 33, 34 zur Abfrage von Stromkreisen der Allgemeinbeleuchtung und ein Datenfernübertragungsbaustein 29, der Bestandteil der Betriebsvorrichtung 27 ist, sowie eine Leuchtdiode 39 dargestellt, deren Funktion später erläutert wird.

Die Betriebsvorrichtung bzw. das Betriebsgerät 27 kann mit seinen unterschiedlichen Bausteinen 28, 29, 30 entweder als bauliche und schaltungstechnische Einheit ausgebildet sein oder modular aufgebaut sein.

Im Folgenden wird die Funktionsweise der Anlage entsprechend Fig. 1, 2 und 4 erläutert. Im Normalbetrieb der dargestellten Anlage für die Sicherheitsbeleuchtung und der Anlage für die Allgemeinbeleuchtung sollen entsprechend der vorgegebenen Betriebsart Dauerbetrieb die für diese Betriebsart vorgesehenen Leuchten 35 leuchten. Das Netz 2 liefert in diesem Normalbetrieb Netzstrom an die Hauptverteilung 1, die diesen an die Unterverteilungen 7, 10, 11, 12 über die Ringleitung 4, 5, 6 weiterleitet. Wenn die Unterverteilungen entsprechend der Fig. 2 aufgebaut sind, wird der Netzstrom den Endstromkreisen 13 bis 20 und damit den Leuchten 35 zugeführt. Die Erkennungs- und Steuereinheit 28 derjenigen Leuchten 35, die als Sicherheitsleuchten im Dauerbetrieb vorbestimmt sind, identifiziert die Stromform ihrer Versorgungsspannung als Wechselstrom und steuert das Lampenvorschaltgerät 30 an, das die Lampe 32 einschaltet und im eingeschalteten Zustand hält. Die Erkennungs- und Steuereinheit 28 der Leuchten 35 für den Bereitschaftsbetrieb erkennt gleichfalls die Stromform Wechselstrom und steuert das Lampenvorschaltgerät 30 in der Weise an, daß die Lampen 32 ausgeschaltet bleiben. Falls es gewünscht ist, kann anstelle einer völligen Abschaltung der von dem Betriebsgerät 27 betriebenen Lampen 32 im Normalbetrieb, d.h. störungsfreien Betrieb bei Verwendung von Leuchtstofflampen die Leuchten der Bereitschaftsschaltung in einem Standby-Zustand betrieben werden, also stark gedimmt werden, so daß sie für das Auge als ausgeschaltet erscheinen. In diesem Fall steuert das Lampenvorschaltgerät 30 die Leuchtstofflampe 32 entsprechend an. Dies hat den Vorteil eines schnellen Aufbaus des vollen Lichtstroms im Notfall, wie es beispielsweise an Arbeitsplätzen mit besonderer Gefährdung notwendig ist.

Im Notbetrieb, z.B. bei Ausfall der Netzstromversorgung 2 schaltet die Hauptverteilung 1 auf die Ersatzstromquelle 3 um und liefert an die Ringleitung 4, 5, 6 einen Gleichstrom, der in beschriebener Weise an die Leuchten 35 über die Unterverteilungen weiter geleitet wird. Jetzt identifizieren alle Erkennungs- und Steuereinheiten 28 der Leuchten 35 den Gleichstrom als Notbetrieb und die Leuchten 35 des Dauerbetriebes bleiben eingeschaltet, während die vorher ausgeschalteten oder stark gedimmten Leuchten des Bereitschaftsbetriebes voll eingeschaltet werden.

In Fig. 3 ist eine Unterverteilung 42 dargestellt, die für eine Lichtbedarfsschaltung und/oder eine modifizierte Bereitschaftsschaltung der Leuchten im Bereitschaftsbetrieb geeignet ist. Die Unterverteilung 42 weist eine als Gleichrichter ausgebildete Umformeinheit 23 sowie eine Umschaltvorrichtung 26 auf. Weiterhin ist eine Fühlerleitung oder Überwachungsleitung 25 vorgesehen, die beispielsweise an eine Unterverteilung der Allgemeinbeleuchtung angeschlossen ist und die den Schaltzustand der entsprechenden über die Unterverteilung gespeisten Allgemeinbeleuchtung abtastet oder aber auch die Stromversorgung dieses Abschnittes der Allgemeinbeleuchtung überwacht. Beispielsweise liegt auf der Eingangsleitung 24 Strom mit einer ersten Stromform, im Normalbetrieb Wechselstrom, und die Umschaltvorrichtung 26 ist in der nicht dargestellten Schaltstellung, da die Fühlerleitung 25 kein Signal führt. In diesem Fall wird der Wechselstrom an das Verteilerfeld 22 weiter geleitet und die Leuchten in Dauerbetrieb sind eingeschaltet, während die Leuchten in Bereitschaftsbetrieb ausgeschaltet sind. Wenn nun ein Signal an der Fühlerleitung 25 liegt, beispielsweise weil ein Abschnitt der Allgemeinbeleuchtung eingeschaltet wurde (Lichtbedarfsschaltung), schaltet die Umschaltvorrichtung 23 in den dargestellten Schaltzustand und der Wechselstrom wird in eine dritte Stromform durch die Umformeinheit 23, beispielsweise in einen pulsierenden Wechselstrom umgeformt, der auf das Verteilerfeld 22 geschaltet wird. Durch diese Stromform erkennen die Leuchten bzw. die zugeordneten Erkennungs- und Steuereinheiten 28 des Dauerbetriebes, daß sie eingeschaltet bleiben sollen und die Leuchten des Bereitschaftsbetriebes schalten aufgrund ihres Versorgungsstromes in der dritten Stromform ein. Wenn die Umschaltvorrichtung im Lichtbedarfsfall wieder in die nicht dargestellte Stellung aufgrund der Beendigung des Signals auf der Fühlerleitung 25 schaltet, werden die Bereitschaftsleuchten wieder ausgeschaltet.

Wenn Gleichstrom an der Eingangsleitung 24 anliegt, der besagt, daß ein Notfall vorliegt, hat das Signal auf der Fühlerleitung 25 keine Wirkung, da alle Leuchten eingeschaltet sein müssen.

In Fig. 3 ist nur eine Fühlerleitung 25 dargestellt. Selbstverständlich können mehrere Fühlerleitungen, z.B. für die Lichtbedarfsschaltung und für die modifizierte Bereitschaftsschaltung vorgesehen sein, wobei dann eine weitere Umformeinheit 23 für eine vierte Stromform vorgesehen ist. Im Falle der modifizierten Bereitschaftsschaltung könnte diese Stromform dem Gleichstrom entsprechen.

In Fig. 4 sind gleichfalls Fühlerleitungen 34 und 33 zur Abfrage von Stromkreisen der Allgemeinbeleuchtung entweder für eine Lichtbedarfsschaltung oder eine modifizierte Bereitschaftsschaltung dargestellt. Diese Ausbildung arbeitet ähnlich der wie in Fig. 3 dargestellt und sie wird vorzugsweise bei kleinen Anlagen angewandt. Die Erkennungs- und Steuerschaltung 28 erkennt den Schaltzustand auf den Fühlerleitungen 33, 34 und bewirkt, daß die Lampen trotz Anliegen einer ersten Stromform an der Eingangsleitung 38 eingeschaltet werden.

In dem Betriebsgerät 27 kann ein Speicher vorgesehen sein, der die Schaltzustände der verschiedenen Elemente speichert, wobei die Leuchtdiode 39 (es können auch mehrere vorgesehen sein) die Funktionsweise der Leuchte beim letzten Betrieb an einer oder allen Stromformen anzeigt.

Der Speicher kann auch bei einem Prüfbetrieb oder bei einer Datenfernübertragung Verwendung finden, wobei er vorzugsweise eine Adresse für die Leuchte speichert. Für die Datenfernübertragung ist der Datenfernübertragungsbaustein 29 vorgesehen, der mit entsprechenden Bausteinen in der Hauptverteilung oder den Unterverteilung unidirektional oder bidirektional kommunizieren kann. Gegebenenfalls kann über die Datenfernübertragung der Erkennungs- und Steuerbaustein 28 in seiner Programmierung geändert werden, so daß in einfacher Weise eine Leuchte im Dauerbetrieb auf Bereitschaftsbetrieb oder umgekehrt umprogrammiert werden kann.

Die Stromformen sind hier nur beispielhaft angegeben und insbesondere die Stromformen, die nicht unmittelbar den Not- oder Dauerbetrieb betreffen, können in der Hauptverteilung oder in den Unterverteilungen oder einzelnen Unterverteilungen erzeugt werden. Die Funktionsweisen der Leuchten werden aufgrund der Planung der Anlage vorgegeben, wobei die Informationen zur Erstellung der unterschiedlichen Funktionen den Umformeinheiten zugeführt werden müssen. Die Stromformen sind beliebig wählbar, wobei auch eine Kombination unterschiedlicher Stromformen möglich ist.

## Patentansprüche

1. Elektrische Anlage zur Netz- und Ersatzstromversorgung von Sicherheitsleuchten, denen jeweils eine Betriebsvorrichtung zum Betreiben mindestens einer Lampe zugeordnet ist, mit einer Überwachungsvorrichtung des Zustandes der Stromversorgung der Allgemeinbeleuchtung und einer zentralen Hauptverteilung, die einen von der Netzstromversorgung herrührenden Strom und bei deren Störung einen von der Ersatzstromversorgung herrührenden Strom an mindestens eine Ausgangsleitung liefert,
**dadurch gekennzeichnet,**
daß mindestens eine Unterverteilung(7, 10, 11, 12) an die Ausgangsleitung angeschlossen ist, die mit mindestens einem eine Mehrzahl von Sicherheitsleuchten (35) aufweisenden Ausgangsstromkreis (13 - 20) verbunden ist, wobei die elektrische Verbindung zwischen Unterverteilung (7, 10 - 12) und Hauptverteilung (1) einerseits und Unterverteilung (7, 10 - 12) und Sicherheitsleuchten (35) andererseits bis auf schaltungsbedingte kurze Unterbrechungszeiten ständig besteht und daß der von der Unterverteilung (7, 10 - 12) an den Ausgangsstromkreis (13 - 20) gelieferte Versorgungsstrom für die Leuchten (35) abhängig von dem Zustand der Stromversorgung der Allgemeinbeleuchtung unterschiedliche Stromformen besitzt, wobei die Betriebsvorrichtung (27) jeder Sicherheitsleuchte (35) eine Erkennungs- und Steuerschaltung (28) aufweist, die abhängig von der Stromform des Versorgungsstroms der Leuchte (35) die Betriebsart und/oder den Betriebszustand der mindestens einen Lampe (35) steuert.

2. Elektrische Anlage nach Anspruch 1, dadurch gekennzeichnet, daß eine Mehrzahl von Unterverteilungen (7, 10 - 12) vorgesehen sind, wobei an eine Unterverteilung weitere Unterverteilungen nachschaltbar sind.

3. Elektrische Anlage nach Anspruch 1 oder 2, dadurch gekennzeichnet, daß die Sicherheitsleuchten (35) unterschiedlichen Betriebsarten zugeordnet sind, wobei die jeweiligen Erkennungs- und Steuerschaltungen (28) der Sicherheitsleuchten (35) an die jeweilige Betriebsart angepaßt sind.

4. Elektrische Anlage nach Anspruch 3, dadurch gekennzeichnet, daß die Betriebsarten der Sicherheitsleuchten (35) den Dauerbetrieb und den Bereitschaftsbetrieb umfassen, denen zwei unterschiedliche Stromformen zugeordnet sind.

5. Elektrische Anlage nach einem der Ansprüche 1 bis 4, dadurch gekennzeichnet, daß der Netzstrom der Netzversorgung (2) eine erste Stromform und der Ersatzstrom der Ersatzstromversorgung (3) gegebenenfalls unter Umformung desselben eine zweite Stromform bilden, wobei bei Anliegen des Stroms der ersten Stromform an den Leuchten (35) die Erkennungs- und Steuerschaltung (28) der Leuchten (35) der Betriebsart Dauerbetrieb die Lampen einschaltet und im eingeschalteten Zustand hält, während die Erkennungs- und Steuerschaltung (28) der Leuchten der Betriebsart Bereitschaftsbetrieb die Lampen (35) ausschaltet bzw. ausgeschaltet oder im Standby-Zustand hält und wobei bei Anliegen des Stroms der zweiten Stromform die Erkennungs- und Steuerschaltung (28) der Leuchten beider Betriebsarten die Lampen einschaltet bzw. im eingeschalteten Zustand hält.

6. Elektrische Anlage nach einem der Ansprüche 1 bis 5, dadurch gekennzeichnet, daß die mindestens eine Unterverteilung (7, 10 - 12) eine Umformeinheit (23) aufweist, die den ihr zugeführten Strom abhängig von zusätzlichen weiteren Informationen in Strom unterschiedlicher Stromformen wandelt, über die der Betriebszustand vorzugsweise der Sicherheitsleuchten (35) in Bereitschaftsbetrieb gesteuert wird.

7. Elektrische Anlage nach einem der Ansprüche 1 bis 6, dadurch gekennzeichnet, daß die Unterverteilung (7, 10 - 12) mit mindestens einer Leitung (25) zur Überwachung der Stromversorgung der Allgemeinbeleuchtung und/oder des Schaltzustandes der Allgemeinbeleuchtung verbunden ist, wobei die Umformeinheit (23) den Strom entsprechend der Information auf der mindestens einen Leitung umformt.

8. Elektrische Anlage nach einem der Ansprüche 1 bis 7, dadurch gekennzeichnet, daß zumindest einige Sicherheitsleuchten (35) mit mindestens einer Leitung (33, 34) zur Überwachung der Stromversorgung der Allgemeinbeleuchtung und/oder des Schaltzustandes der Allgemeinbeleuchtung verbunden sind, wobei die Erkennungs- und Steuervorrichtung (28) des Betriebsgerätes (22) der Leuchte (35) den Betriebszustand der Lampe (32) abhängig von der anliegenden Stromform und der Information auf der mindestens einen Leitung steuert.

9. Elektrische Anlage nach einem der Ansprüche 1 bis 8, dadurch gekennzeichnet, daß die Ausgangsleitung der Hauptverteilung (1) als Ringleitung (4, 5, 6) ausgebildet ist, an der mehrere Unterverteilungen (7, 10 - 12) angeschlossen sind.

10. Elektrische Anlage nach einem der Ansprüche 1 bis 9, dadurch gekennzeichnet, daß die ständige elektrische Verbindung zwischen Sicherheitsleuchten, Unterverteilungen und Hauptverteilung als Datenleitung genutzt wird, wobei in der Hauptverteilung und gegebenenfalls in der übrigen Verbindung Bausteine der Datenfernübertragung installiert sind, die unidirektional oder bidirektional miteinander kommunizieren.
